# EUROPEAN PATENT APPLICATION

(11) **EP 2 519 072 A1**
(43) Date of publication of application: **31.10.2012**
(21) Application number: 10845079.2
(22) Date of filing: 30.06.2010
(51) Int. Cl.: H04W 88/02

(54) **METHOD FOR CONTROLLING COMMUNICATION STATES OF MOBILE TERMINAL AND MOBILE TERMINAL**

(30) Priority: 02.02.2010 CN 201010111059
(71) Applicant: ZTE Corporation, Shenzhen, Guangdong 518057 (CN)
(72) Inventor: JIANG, Min, Shenzhen Guangdong 518057 (CN); BAO, Zhifan, Shenzhen Guangdong 518057 (CN); CHENG, Qun, Shenzhen Guangdong 518057 (CN)
(74) Representative: Anderson, Angela Mary
(86) International application number: PCT/CN2010/074770
(87) International publication number: WO 2011/094996

(57) **Abstract**

The invention provides a method for controlling communication states of a mobile terminal and the mobile terminal. The method comprises: the mobile terminal receiving and storing a planned time period input by a user and a communication state corresponding to the planned time period through a specific setup interface; and the mobile terminal detecting whether the current time is in the planned time period, if yes, detecting whether the current communication state is consistent with the communication state corresponding to the stored planned time period, and if they are inconsistent, adjusting the current communication state to the communication state corresponding to the planned time period. The invention allows the user to set time planning and corresponding communication states in his mobile terminal according to his own work or learning needs, in order to avoid unnecessary disturbance from incoming calls and short messages while keeping normal communication in his leisure time.

## Description

### Technical Field

The present invention relates to mobile communications, and more particularly, to a method for controlling communication states of a mobile terminal and the mobile terminal.

### Background of the Related Art

In the current information society, roles of information and communication are more and more important. Different users have different demands on functions of mobile terminals (such as, mobile phones, Personal Handy-phone Systems (PHS)). When services are busy or some transactions are required to be processed tranquilly, incoming calls or text messages will certainly affect users' attention. In a classroom where tens of students flock together, for example, incoming and outgoing short messages and MMS (Multimedia Messaging Service) notification messages of mobile communication terminals in class time will seriously affect students' class attention and teachers' teaching process. Moreover, cross-radiation due to the mobile terminals inside the classroom will seriously affect the students' health.

### Summary of the Invention

A object of the present invention is to provide a method for controlling communication states of a mobile terminal and the mobile terminal such that a user can set time planning and corresponding communication states in his mobile terminal according to his own work or learning needs, in order to avoid unnecessary disturbance from incoming calls and short messages while keeping normal communication in his leisure time.

In order to achieve the aforementioned object, the present invention provides a method for controlling communication states of a mobile terminal comprising:
the mobile terminal receiving and storing a planned time period input by a user and a communication state corresponding to the planned time period through a specific setup interface; and
the mobile terminal detecting whether the current time is in the planned time period, if yes, detecting whether the current communication state is consistent with the communication state corresponding to the stored planned time period, and if they are not consistent, adjusting the current communication state to the communication state corresponding to the planned time period.

Preferably, the method also comprises:
the mobile terminal receiving authentication information input by the user, and detecting whether the authentication information is legal, and if yes, entering the specific setup interface.

Preferably, the method also comprises:
if the mobile terminal detects that the current time is in the planned time period, calculating duration from the current time to the end time of the planned time period; and
maintaining the communication state corresponding to the planned time period in the duration.

The present invention also provides a mobile terminal comprising:
a setting module configured to receive and store a planned time period input by a user and a communication state corresponding to the planned time period through a specific setup interface;
a processing module configured to detect whether the current time is in the planned time period, if yes, detect whether the current communication state is consistent with the communication state corresponding to the planned time period stored in the setting module, and if they are not consistent, output a signal to a communication module; and
the communication module configured to receive the signal from the processing module, and then adjust the current communication state to the communication state corresponding to the planned time period and stored in the setting module.

Preferably, the mobile terminal also comprises an authentication module.

The authentication module is configured to receive authentication information input by the user, and detecting whether the authentication information is legal, and if yes, output a signal to the setting module.

The setting module is further configured to receive the signal of the authentication module and then enter the specific setup interface.

Preferably, the mobile terminal also has the following features:
the processing module is further configured to calculate duration from the current time to the end time of the planned time period if detecting that the current time is in the planned time period, and output the calculated duration to the communication module; and
the communication module is further configured to receive the duration and maintain the communication state corresponding to the planned time period in the duration.

Compared with the prior art, the present invention has the following advantages.

The user can set time planning and corresponding communication states in his mobile terminal according to his own work or learning needs, in order to avoid unnecessary disturbance from incoming calls and short messages while keeping normal communication in his leisure time.

In the present invention, the communication states of the mobile terminal in different time periods are set by planning of the user's work and rest time, to reduce harm of radiation of the mobile communication terminal to the user on the basis of meeting basic communication functions. Moreover, due to reduction of network communications, standby time of the mobile communication terminal will certainly be prolonged greatly.

The present invention, which is designed specifically for students, has broad market prospects and is particularly suitable to people in universities, high schools, junior middle schools, and elementary schools.

### Brief Description of Drawings

FIG. 1 is a block diagram of a mobile terminal in accordance with an embodiment of the present invention;
FIG. 2 is a flow chart of a method for controlling communication states of a mobile terminal in accordance with an embodiment of the present invention; and
FIG. 3 is a flow chart of an application example of a method for controlling communication states of a mobile terminal in accordance with the present invention.

### Preferred Embodiments of the Present Invention

Preferred embodiments of the technical scheme of the present invention will be further described below in detail in conjunction with the accompanying drawings.

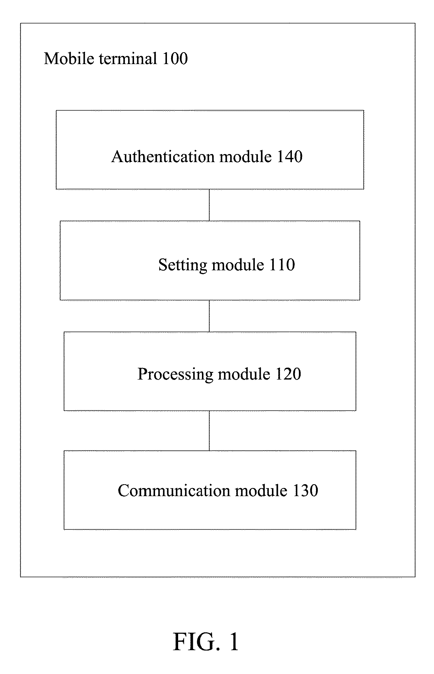

FIG. 1 is a block diagram of a mobile terminal in accordance with an embodiment of the present invention. As shown in FIG. 1, the mobile terminal 100 in accordance with the embodiment comprises a setting module 110, a processing module 120 and a communication module 130.

The setting module 110 is configured to receive and store a planned time period input by a user and a communication state corresponding to the planned time period through a specific setup interface.

Specifically, the setup interface for time planning and communication states is added to the mobile terminal such that the user can set the time planning and the corresponding communication states in the setup interface. The setting module 110 receives the time planning and the corresponding communication state information input by the user, and stores the setting result into a file system.

The processing module 120 is configured to detect whether the current time is in the planned time period stored by the setting module 110, if yes, detect whether the current communication state is consistent with the communication state corresponding to the planned time period stored in the setting module 110, and if they are not consistent, output a signal to the communication module 130.

The communication module 130 is configured to receive the signal from the processing module 120, and then adjust the current communication state to the communication state corresponding to the planned time period and stored in the setting module 110.

For example, assuming that the mobile terminal is currently in a normal communication state, that is, the communication module 130 is in an on state. If the user sets a planned time period, and sets a communication state corresponding to the planned time period to be an off state, when the processing module 120 detects that the current time is in the time period set by the user, the communication module 130 is turned off.

Thus, for the mobile terminal in accordance with this embodiment, the user can set time planning and corresponding communication states in his mobile terminal according to his own work or learning needs, in order to avoid unnecessary disturbance from incoming calls and short messages while keeping normal communication in his leisure time.

Preferably, the mobile terminal in accordance with this embodiment might also comprise an authentication module 140, which is configured to receive authentication information input by the user, detect whether the authentication information is legal, and if it is legal, output a signal to the setting module 110. After receiving the signal from the authentication module 140, the setting module 110 enters the specific setup interface. That is, a user (such as, parents) who has passed the authentication (for example, by entering a user name, password, etc.) can access to the planed setup page, otherwise the user is refused to access to the planed setup interface.

Preferably, the processing module 120 is further configured to calculate duration from the current time to the end time of the planned time period if detecting that the current time is in the planned time period, and then output the calculated duration to the communication module 130. After the communication module 130 receives the duration information, it maintains the communication state corresponding to the planned time period in the duration.

For example, if the user sets to close communication from 9:00am to 10:00am and the processing module 120 detects that the current time is in the planned time period at 9 o'clock in the morning and calculates the duration of one hour from the current time to the end time of the planned time period, then the communication module 130 will maintain the closed state for one hour and return to the normal communication after one hour.

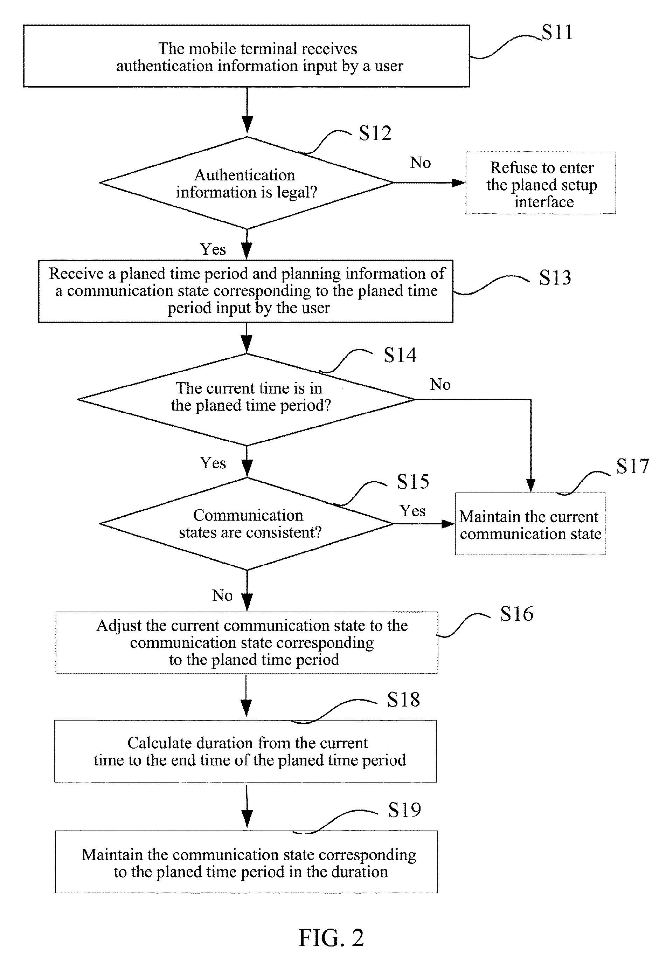

FIG. 2 is a flow chart of a method for controlling communication states of a mobile terminal in accordance with an embodiment of the present invention. As shown in FIG. 2, the method in accordance with the embodiment comprises the following steps.

In S 11, the mobile terminal receives authentication information input by a user.

For example, the user inputs a user name, password, etc.

In S12, whether the authentication information is legal is detected, if it is legal, a planed setup interface is entered, and step S 13 is performed, otherwise, the planed setup interface is refused to be entered.

In S 13, the mobile terminal receives the planned time period input by the user and planning information of a communication state corresponding to the planned time period through the planned setup interface, and then stores the planning information.

Assuming that the planning information input by the user contains a planned time period such as from 9:00am to 10:00am, and a communication state, such as closed communication.

In S 14, the mobile terminal detects whether the current time is in the planned time period, and if yes, step S 15 is performed; otherwise, step S 17 is performed.

In S 15, whether the current communication state is consistent with the stored communication state corresponding to the planned time period is detected, if they are not consistent, step S16 is performed; otherwise, step S 17 is performed.

In S16, the current communication state is adjusted to the communication state corresponding to the planned time period.

In S 17, the current communication state is maintained.

If the current time is 8:00am, the normal communication state is maintained; and if the current time is 9:00am, the communication is closed.

Preferably, after the mobile terminal detects that the current time is in the planned time period, the method further comprises the following steps.

In S18, the duration from the current time to the end time of the planned time period is calculated.

For example, the duration is from 9:00am to 10:00am, i.e., one hour.

In S 19, the communication state corresponding to the planned time period in the duration is maintained.

For example, the communication closed state is maintained for one hour, and then the normal communication state is restored after one hour.

An application example of a method for controlling communication states of a mobile terminal according to the present invention will be described below.

In this application example, according to features of students, students' class time and non-class time are divided by semester, daily class time and the like. For example, the following items are set through interfaces of the mobile terminal.
1. The following several time periods are set.
a) Semester time periods are set.
The students' school time periods are set. For example, school time of a student is set as follows:

| Name | Start | End |
|---|---|---|
| First semester | 2009.3.1 | 2009.7.1 |
| Second semester | 2009.9.1 | 2010.1.20 |
| ...... | ...... | ...... |

Saturdays and Sundays are rest days and can be marked individually.
b) Class time is set.
For example, the class time in a school is set as follows:

| Class time | Start | End |
|---|---|---|
| First class in the morning | 8:00 | 8:45 |
| Second class in the morning | 9:00 | 9:45 |
| Third class in the morning | 10:00 | 10:45 |
| Fourth class in the morning | 11:00 | 11:45 |
| First class in the afternoon | 14:00 | 14:45 |
| Second class in the afternoon | 15:00 | 15:45 |
| Third class in the afternoon | 16:00 | 16:45 |
| | ...... | ...... |

c) Sleep time periods are set.
The sleep time periods in the afternoon and at night are set as follows:

| Sleep time period | Start | End |
|---|---|---|
| Afternoon | 13:00 | 14:00 |
| Night | 22:00 | 06:30 |

d) Special time periods are set.
For example, when there is emergency at home, kids are required to be connected at any time. For example:

| Special time period | Start | End |
|---|---|---|
| Emergency at home | 2009.01.01 8:00 | 2009.01.01 20:00 |
| Grandpa is coming | 2009.12.05 8:00 | 2009.12.05 20:00 |
| ...... | ...... | ...... |

(2) Communication states, mainly communication states of the mobile communication terminal in different time periods, are set.

The above time periods mainly include class time, sleep time, special time, and other time. Setting items of the communication states include normal communication and closed communication. The closed communication means that a communication module (a RF module) in the mobile terminal is turned off, and the mobile terminal can neither receive nor send messages.

For example, a student's communication states are set as follows:

| Time period | Setting of communication states |
|---|---|
| Special time | Normal communication |
| Class time | Closed communication |
| Sleep time | Closed communication |
| Other time | Normal communication |

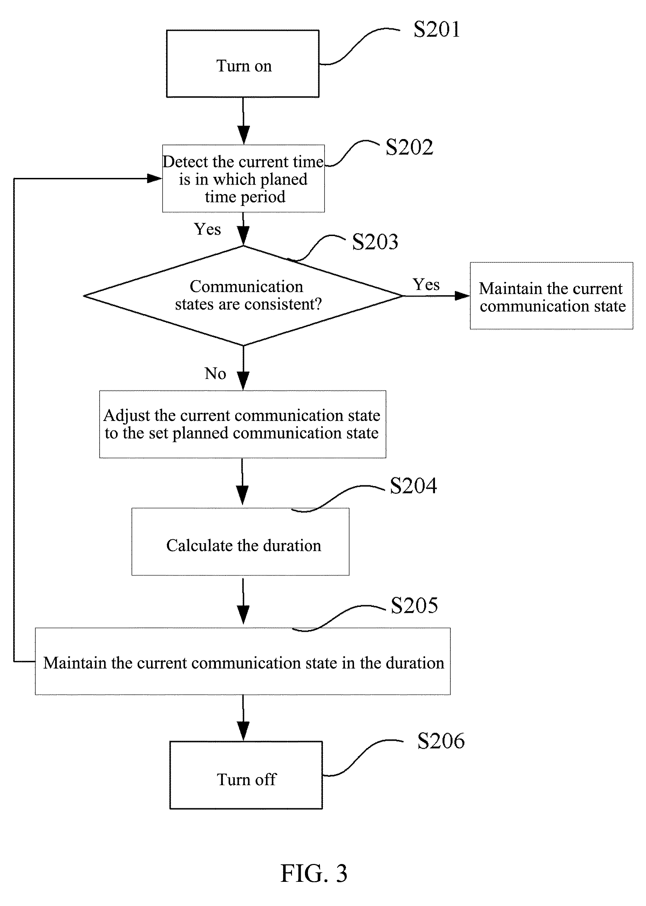

FIG. 3 illustrates a flow chart of a method for controlling communication states of a mobile terminal in accordance with the application example, which comprises the following steps.

In S201, the mobile terminal is turned on.

In S202, it is detected that the current time is in which planned time period set above, such as, the semester time period, the daily class time period, special time period, or sleep time period.

In S203, it is determined whether the current communication state is consistent with the set planned communication state, if they are inconsistent, the current communication state is adjusted to the set planned communication state; otherwise, the current communication state is maintained unchanged.

For example, the communication module at the current time is turned on or off.

In S204, the duration from the current time to a time point at which the recent communication state needs to be changed is calculated.

In S205, the current communication state is maintained in the duration; after the duration, step S202 is performed.

In S206, if the user turns the mobile terminal off, the operation ends.

In this application example, the time planning function is added to the common mobile communication terminal, that is, one day of students can be divided into different time periods, such as class time periods, sleep time periods, special time periods and other time periods. In the class time periods and sleep time periods, by turning off the communication module in the mobile terminal, the students in the class will not be disturbed by ring tones of incoming calls, SMS, MMS, and the like, thus ensuring the normal teaching order in the classroom; meanwhile, due to turning off of the communication module, radiation of the mobile communication terminal is reduced to zero. In the other time periods, the communication module of the mobile terminal is turned on to meet people's communication requirements. In the special time periods, for example, when there is an emergency at home, the communication module can be set to be in an on state all the time to ensure convenient communication with outside in the special time periods.

As described above, by planning the students' time, communication states of mobile communication terminals in different time periods can be set to greatly reduce radiation of the mobile communication terminals to users. Due to the reduction of network traffic, the electricity consumption will certainly be decreased such that standby time of the mobile communication terminals can be increased greatly.

Because the mobile terminal in accordance with the present invention can greatly reduce the radiation to students, teachers and students in the class, teachers and students will not be disturbed in class by incoming calls, text messages, and the like, and normal communication can be maintained after class, it will certainly especially liked by the majority of students, teachers and communities.

The present invention can be applied to not only students, but also all users who need to set the corresponding communication states according to different time periods.

The above embodiments are only examples of illustrating a method for controlling communication states of a mobile terminal in accordance with the present invention and should not be construed as limitation of the present invention. Various equivalent variations or substitutions may be made according to description of the technical scheme of the present invention and its preferred embodiments, and all these equivalent variations and substitutions should be covered within the protection scope of the claims of the present invention.

### Industrial Applicability

The technical solution of the present invention can let the users set time planning and the corresponding communication states in the mobile terminal according to their work or learning needs, in order to avoid disturbance of incoming calls and the SMS when they are unavailable, while to be able to communicate properly in their leisure time, thus it is particularly applicable to student crowds.

## Claims

1. A method for controlling communication states of a mobile terminal comprising:
the mobile terminal receiving and storing a planned time period input by a user and a communication state corresponding to the planned time period through a specific setup interface; and
the mobile terminal detecting whether the current time is in the planned time period, if yes, detecting whether the current communication state is consistent with the communication state corresponding to the stored planned time period, and if they are not consistent, adjusting the current communication state to the communication state corresponding to the planned time period.

2. The method according to claim 1, further comprising:
the mobile terminal receiving authentication information input by the user, and detecting whether the authentication information is legal, and if yes, entering the specific setup interface.

3. The method according to claim 1, further comprising:
if the mobile terminal detects that the current time is in the planned time period, calculating duration from the current time to the end time of the planned time period; and
maintaining the communication state corresponding to the planned time period in the duration.

4. A mobile terminal comprising:
a setting module configured to receive and store a planned time period input by a user and a communication state corresponding to the planned time period through a specific setup interface;
a processing module configured to detect whether the current time is in the planned time period, if yes, detect whether the current communication state is consistent with the communication state corresponding to the planned time period stored in the setting module, and if they are not consistent, output a signal to a communication module; and
the communication module configured to receive the signal from the processing module, and then adjust the current communication state to the communication state corresponding to the planned time period and stored in the setting module.

5. The mobile terminal according to claim 4, further comprising an authentication module, wherein
the authentication module is configured to receive authentication information input by the user, and detecting whether the authentication information is legal, and if yes, output a signal to the setting module; and
the setting module is further configured to receive the signal of the authentication module and then enter the specific setup interface.

6. The mobile terminal according to claim 4, wherein
the processing module is further configured to calculate duration from the current time to the end time of the planned time period if detecting that the current time is in the planned time period, and output the calculated duration to the communication module; and
the communication module is further configured to receive the duration and maintain the communication state corresponding to the planned time period in the duration.
